# EUROPÄISCHE PATENTSCHRIFT

(11) **EP 3 862 205 B1**
(45) Veröffentlichungstag und Bekanntmachung des Hinweises auf die Patenterteilung: **28.09.2022**
(21) Anmeldenummer: 21154709.6
(22) Anmeldetag: 02.02.2021
(51) Int. Cl.: B60K 1/04

(54) **BATTERIEELEKTRISCH BETRIEBENES SATTELKRAFTFAHRZEUG**
BATTERY-OPERATED SEMI-TRAILER MOTOR VEHICLE
VÉHICULE ARTICULÉ FONCTIONNANT SUR BATTERIE ÉLECTRIQUE

(30) Priorität: 04.02.2020 DE 102020000734
(43) Veröffentlichungstag der Anmeldung: 11.08.2021
(73) Patentinhaber: MAN Truck & Bus SE, 80995 München (DE)
(72) Erfinder: Finkel, Simon, 80995 München (DE)
(74) Vertreter: v. Bezold & Partner Patentanwälte - PartG mbB

(56) Entgegenhaltungen:
- DE-A1- 2 204 962
- DE-A1-102010 056 179
- DE-U1-202016 006 076
- US-A1- 2011 114 398

## Beschreibung

Die Erfindung betrifft ein batterieelektrisch betriebenes Sattelkraftfahrzeug, umfassend eine Sattelzugmaschine und einen Sattelauflieger. Die Erfindung betrifft ferner ein Verfahren zum Betrieb eines Sattelkraftfahrzeugs.

Ein Sattelkraftfahrzeug, auch als Sattelzug bezeichnet, ist allgemein bekannt und ist ein Gespann aus einer Sattelzugmaschine und einem Sattelauflieger. Die Sattelzugmaschine basiert technisch in der Regel auf einem kurzen Lkw-Fahrgestell mit Fahrerhaus, Lenk- und Antriebsachse(n), Motor und Getriebe, auf dessen Rahmen eine Sattelkupplung (auch Sattelplatte genannt) zur Befestigung des Sattelaufliegers aufgeschraubt ist. Derartige Sattelauflieger weisen einen Trailer-Aufbau mit einem Aufliegerboden auf, an dem im unteren hinteren Aufbaubereich eine oder mehrere Achsen als Laufachsen fest verbunden angeordnet sind.

Im vorderen Aufbaubereich ragt üblicherweise mittig ein sogenannter Königszapfen nach unten ab, mit dem eine Kopplung mit einer Sattelplatte auf einer Sattelzugmaschine oder einem Dolly (Drehgestell) für den Fahrbetrieb als Sattelzug-Kombination durchführbar ist. Für eine Parkstellung ohne Kopplung an eine Sattelzugmaschine kann der Trailer zudem im vorderen Bereich einfahrbare und/oder abklappbare Stützfüße aufweisen. Bei einer solchen Sattelzug-Kombination erfolgt der Antrieb über wenigstens eine angetriebene Achse als Triebachse der Sattelzugmaschine.

Aus dem Stand der Technik sind neben verbrennungsmotorisch angetriebenen Sattelkraftfahrzeugen auch batterieelektrisch angetriebene Sattelkraftfahrzeuge bekannt. So beschreibt die Offenlegungsschrift DE 10 2012 108 768 A1 eine Sattelkraftmaschine für ISO-Container mit mindestens einem in der Zugmaschine angeordneten elektrischen Fahrmotor, der über eine in dem Sattelzug angeordnete Batterie versorgt ist. Zusätzlich ist eine im Auflieger angeordnete (optionale) zweite Batterie im Sinne einer Zusatzbatterie angeordnet. Die Zusatzbatterie ist unter dem Rahmen des Aufliegers aufgehängt und zwischen der dritten Achse des Aufliegers und der Zugmaschine angeordnet. Die Zusatzbatterie ist elektrisch mit dem elektrischen Fahrmotor der Zugmaschine verbunden.

Sowohl betreffend die in der Zugmaschine als auch die in dem Auflieger vorgesehene Batterie ist vorgesehen, dass, wenn die Batterien entladen sind, diese jeweils gegen eine geladene Batterie auswechselbar ist und von einer entsprechenden Vorrichtung quer zu einer Fahrtrichtung des Sattelzuges horizontal aus dem Auflieger beziehungsweise in diesen hinein bewegbar ist. Der Ladevorgang der Batterie findet somit außerhalb des Aufliegers statt, und der Auflieger ist nach einem Batteriewechsel wieder verfügbar, so dass die Sattelkraftmaschine nicht auf die Beendigung des zeitaufwändigen Ladens der Traktionsenergiespeicher warten muss. Der Wechselvorgang kann hierbei manuell, halbautomatisch oder vollautomatisch erfolgen. Nachteilig hieran ist der mit dem Batteriewechsel verbundene Zusatzaufwand, der ferner an den Beladungsterminals für solche Sattelkraftmaschinen entsprechend geeignete Handhabungsvorrichtungen zum Durchführen des Batteriewechsels erfordert.

Dokument DE 20 2016 006 076 U1 offenbart einen gattungsgemäßen Anhänger für ein Kraftfahrzeug, wobei eine tragende Konstruktion eines Anhängerrahmens des Anhängers im Wesentlichen aus miteinander verbundenen Elementen aus einem Schichtverbundwerkstoff, insbesondere einem Sandwichverbundwerkstoff, besteht, und der Anhängerrahmen zumindest eine Aussparung für die Aufnahme von jeweils einem oder mehreren Akkupacks aufweist. Ferner offenbart das Dokument ein System umfassend ein Kraftfahrzeug und einen an das Kraftfahrzeug anbringbaren Anhänger.

Dokument DE 10 2010 056 179 A1 offenbart ein Gespann mit einem wenigstens ein Antriebsaggregat aufweisenden und durch dieses angetriebenen Zugkraftwagen, mit einem mit diesem gekoppelten Anhänger, und mit wenigstens einer Speichereinrichtung, mittels welcher Energie oder ein Medium zum Betreiben des Antriebsaggregats speicherbar ist, wobei die Speichereinrichtung an dem Anhänger angeordnet ist.

Dokument US 2011/114398 A1 offenbart ein Batterieversorgungssystem für einen Plug-in-Hybrid- oder Elektro-Zugmaschinen-Anhänger, wobei ein Batteriemodul verwendet wird, das von dem Anhänger aufgenommen wird. Ein Kabel, das mit dem Batteriemodul verbunden ist, wird mit einem Anschluss am Fahrerhaus verbunden, um den Elektromotor des Fahrerhauses mit Strom zu versorgen. Das Fahrerhaus kann vom Anhänger abgekoppelt werden, während das Batteriemodul des Anhängers aufgeladen wird. Das Fahrerhaus kann dann von dem Elektromotor angetrieben werden, der von der Batterie des Fahrerhauses gespeist wird. Dokument DE 22 04 962 A1 offenbart einen Ausleger eines Fahrwerkteiles, der als starr am Tragrahmen befestigte Aufliegervorrichtung für eine Sattelzugmaschine ausgebildet ist, wobei der Tragrahmen mit mindestens zwei Hubvorrichtungen versehen ist, die jeweils eine in senkrechter Richtung ausfahrbare und mit mindestens einer Stützrolle versehene Druckstange aufweisen.

Es ist daher eine Aufgabe der Erfindung, einen Ansatz bereitzustellen, mit dem Nachteile herkömmlicher Techniken vermieden werden können, um einen effizienten Betrieb eines batterieelektrisch betriebenen Sattelkraftfahrzeugs zu ermöglichen. Die Aufgabe der Erfindung ist es insbesondere, ein batterieelektrisch betriebenes Sattelkraftfahrzeug bereitzustellen, dessen elektrischer Energiespeicher eine hohe Reichweite aufweist und zeiteffizient geladen werden kann.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten allgemeinen Gesichtspunkt der Erfindung wird ein batterieelektrisch betriebenes Sattelkraftfahrzeug, umfassend eine Sattelzugmaschine, einen Sattelauflieger und eine in der Sattelzugmaschine angeordnete elektrische Maschine zum Antrieb des Sattelkraftfahrzeugs bereitgestellt. Diese elektrische Maschine kann auch als Traktionsmaschine oder E-Motor bezeichnet werden und wird nachfolgend als erste elektrische Maschine bezeichnet zur besseren Unterscheidung von einer weiteren optional elektrischen Maschine, die am Sattelauflieger angeordnet ist. Das Sattelkraftfahrzeug, nachfolgend auch kurz als Sattelzug bezeichnet, ist ein Gespann aus einer Sattelzugmaschine (auch Sattelschlepper genannt) und einem Sattelauflieger (auch Sattelanhänger, Brücke, Auflieger oder Trailer genannt). Ein batterieelektrisch betriebenes Sattelkraftfahrzeug ist ein Sattelkraftfahrzeug, das rein elektrisch betrieben wird und somit keinen verbrennungsmotorischen Antrieb aufweist. Das batterieelektrisch betriebene Sattelkraftfahrzeug kann jedoch einen sogenannten Range-Extender (engl.; deutsch Reichweitenverlängerer) aufweisen.

Die erste elektrische Maschine ist aus einem elektrischen Energiespeicher, der im Bereich des Sattelaufliegers angeordnet ist, mit elektrischer Antriebsenergie versorgbar und steht hierzu mit dem elektrischen Energiespeicher elektrisch in Verbindung. Dieser elektrische Energiespeicher wird nachfolgend als erster elektrischer Energiespeicher bezeichnet zur besseren Unterscheidung von einem nachfolgend noch beschriebenen weiteren elektrischen Energiespeicher, der in der Sattelzugmaschine angeordnet ist. Der erste elektrische wiederaufladbare Energiespeicher dient zum Speichern elektrischer Traktionsenergie und kann daher auch als Traktionsenergiespeicher oder Traktionsbatterie bezeichnet werden.

Gemäß einer besonders bevorzugten Ausführungsform ist der erste elektrische Energiespeicher in einen Sattelaufliegerboden baulich integriert. Der Sattelaufliegerboden ist somit zur Anordnung des ersten elektrischen Energiespeichers ausgebildet. Der erste Energiespeicher ist somit fest in den Aufliegerboden verbaut, d. h., der erste Energiespeicher ist nicht als Wechselenergiespeicher ausgeführt. Im Rahmen der Erfindung wurde festgestellt, dass der Sattelaufliegerboden aufgrund seiner großen Grundfläche sich in vorteilhafter Weise dazu eignet, eine hohe Batteriekapazität unterzubringen, insbesondere im Vergleich zum begrenzten Platz, der hierfür in einer klassischen Sattelzugmaschine verfügbar wäre. Der erste Energiespeicher dient somit nicht nur als Zusatzbatterie, sondern als Hauptbatterie, die vorzugsweise eine langstreckentaugliche Batteriekapazität bereitstellt.

Gemäß dieser besonders bevorzugten Ausführungsform ist der Aufliegerboden somit als Kombinationsbauteil ausgeführt, das einerseits eine Tragstruktur zur Aufnahme einer durch eine Beladung des Sattelaufliegers verursachten Traglast ausbildet und ferner zur Anordnung und/oder Unterbringung des ersten elektrischen Energiespeichers dient.

Gemäß einer besonders vorteilhaften Variante umfasst der Sattelaufliegerboden eine Tragstruktur zur Aufnahme einer durch eine Beladung des Sattelaufliegers verursachten Traglast und eine Crashstruktur zum Schutz des in den Sattelaufliegerboden integrierten ersten elektrischen Energiespeichers. Dies ermöglicht eine baulich kompakte und gleichzeitig sichere Anordnung des ersten elektrischen Energiespeichers. Ein besonderer Vorzug ist ferner, dass die Tragstruktur des Aufliegers gleichzeitig einen mechanischen Schutz des elektrischen Energiespeichers ausbilden kann. Ferner dient die Tragstruktur zur Anbindung des Fahrwerks, der Stützfüße oder eines Stützrades und zur Verbindung zum Zugfahrzeug, z. B. mittels des Königszapfens.

Unter einer Crashstruktur wird eine Vorrichtung, z. B. eine Deformationseinrichtung, verstanden, über welche Kräfte in einem Crashfall gezielt weitergeleitet und/oder aufgenommen werden, um eine Krafteinleitung in bestimmte Bereiche zu vermeiden. Im Falle eines Aufpralls wird mit Hilfe einer Crashstruktur Energie über vorgegebene Lastpfade weitergeleitet und/oder abgebaut. Die Crashstruktur kann beispielsweise Deformationselemente umfassen, die den ersten elektrischen Energiespeicher außenseitig zumindest in Teilbereichen umgeben.

Erfindungsgemäß weist zur baulichen Integration des ersten elektrischen Energiespeichers in den Sattelaufliegerboden der Sattelaufliegerboden einen Hohlraum auf, in welchem der erste elektrische Energiespeicher angeordnet ist. Gemäß einer bevorzugten Variante kann der Hohlraum mindestens eine Höhe von 0,2 m aufweisen.

Die Tragstruktur kann durch eine Rahmenstruktur gebildet sein, die neben Tragelementen, die die äußeren Kanten des Aufliegerbodens ausbilden, ferner im Innenraum verlaufende Quer- und Stützstreben aufweist. Derartige Quer- und Stützstreben können den Hohlraum des Aufliegerbodens in einzelne Teilabschnitte unterteilen, in denen jeweils einzelne Speichermodule des ersten elektrischen Energiespeichers angeordnet sind.

Gemäß einem weiteren Aspekt kann die Höhe des Hohlraums höchstens 0,4 m betragen. Ein besonders vorteilhafter Bereich liegt in einem Bereich von 0,2 m bis 0,4 m oder von 0,25 m bis 0,35 m. Aufgrund der großen Grundfläche des Sattelaufliegerbodens kann in einem derartigen Hohlraum eine für eine typische Tagesreichweite benötigte Batteriekapazität untergebracht werden, insbesondere dann, wenn hierfür ein Großteil der Grundfläche des Sattelaufliegerbodens zur Ausbildung des Hohlraum und zur Unterbringung des ersten elektrischen Energiespeichers ausgenutzt wird.

Entsprechend ist gemäß einer weiteren Ausführungsform vorgesehen, dass sich der erste elektrische Energiespeicher über mindestens die Hälfte einer Grundfläche des Sattelaufliegerbodens erstreckt. Unter der Grundfläche des Sattelaufliegerbodens wird diejenige horizontale Fläche verstanden, die sich aus der Länge l mal der Breite b, l * b, des Aufliegerbodens ergibt. Anders ausgedrückt ist eine Länge und Breite des ersten elektrischen Energiespeichers derart dimensioniert, dass sich der erste Energiespeicher in horizontaler Richtung über mindestens die Hälfte der Grundfläche des Sattelaufliegerbodens erstreckt. Dies ermöglicht die Unterbringung einer hohen Batteriekapazität bei gleichzeitig flacher Bauweise.

Bevorzugte Weiterbildungen dieser Ausführungsform sehen vor, dass sich der erste elektrische Energiespeicher über einen Bereich der Grundfläche des Sattelaufliegerbodens erstreckt, der mindestens 2/3 oder mindestens 3/4 oder mindestens 4/5 oder im Wesentlichen genau so groß wie die Grundfläche des Sattelaufliegerbodens ist.

Vorstehend wurde bereits festgestellt, dass der erste elektrische Energiespeicher als Hauptenergiespeicher für das batterieelektrisch betriebene Sattelkraftfahrzeug dient. Beispielsweise kann der erste elektrische Energiespeicher eine Bruttokapazität von mindestens 1250 kWh aufweisen oder eine Bruttokapazität aufweisen, die in einem Bereich von 1300 kWh bis 2100 kWh oder in einem Bereich von 1400 kWh bis 1900 kWh liegt. Die Bruttokapazität eines elektrischen Energiespeichers ist bekanntermaßen höher als die Nettokapazität, da der gesamte verfügbare Kapazitätsbereich der Batteriezellen (Bruttokapazität) in erster Linie aus Lebensdauergründen nicht genutzt werden kann. Beispielsweise kann der erste elektrische Energiespeicher eine Nettokapazität von mindestens 800 kWh oder von mindestens 1000 kWh oder von mindestens 1100 kWh aufweisen. Lediglich beispielhaft kann eine Nettokapazität von 1100 kWh einer Bruttokapazität von 1500 kWh entsprechen bei einer nutzbaren Entladungstiefe (engl. Depth of Discharge, DoD) von 60%. Je nach Batterietyp können auch DoD-Werte von z. B. 80% realisierbar sein.

Mit anderen Worten kann der erste elektrische Energiespeicher zur Bereitstellung einer üblichen Tageslaufleistung des Sattelkraftfahrzeugs ausgebildet sein. Eine übliche Tageslaufleistung kann im Bereich von 750 km liegen. Bei einer angenommenen hierfür benötigten Tagesnettobatteriekapazität von 1125kWh/Tag entspricht dies einer zu installierenden Bruttokapazität von ca 1875 kWh, wobei eine beispielhafte Annahme einer nutzbaren Entladungstiefe (DoD) von 60% zu Grunde gelegt wurde.

Bei einer heute schon realisierten volumetrischen Energiedichte von (brutto) -180 kWh/m³ ergibt dies ein notwendiges Volumen von 10,4 m³ zur Unterbringung der Batteriekapazität. Bei einer beispielhaften Grundfläche von 33,79 m² eines Sattelaufliegers ergibt sich eine Höhe des Energiespeichers von 0,31 m, wenn sich dieser über diese Grundfläche erstreckt. Entsprechend kann ein vorteilhafter Bereich des Hohlraums im Auflieger zur Unterbringung des ersten elektrischen Energiespeichers in einem Bereich von 0,25 bis 0,35 m liegen, wie vorstehend bereits erwähnt wurde.

Aufgrund der üblichen Konstruktion der Sattelzugmaschine steht dort nicht ausreichend Bauraum zur Verfügung, um solche Batteriekapazitäten in praktikabler Weise unterzubringen, während die Nutzung des Bauraums des Aufliegerbodens dies in vorteilhafter Weise ermöglicht.

In einer weiteren Ausführungsform umfasst das Sattelkraftfahrzeug einen in der Sattelzugmaschine angeordneten weiteren elektrischen Energiespeicher, nachfolgend als zweiter elektrischer Energiespeicher bezeichnet. Der zweite elektrische Energiespeicher ist mit dem ersten Energiespeicher elektrisch parallel verschaltet. Dieser zweite elektrische Energiespeicher ist ausgebildet, die erste elektrische Maschine mit elektrischer Energie zu versorgen, wobei eine Kapazität des zweiten elektrischen Energiespeichers kleiner als die Kapazität des ersten elektrischen Energiespeichers ist. Bevorzugt dient der erste elektrische Energiespeicher nur als Rangierenergiespeicher, z. B. für Rangierfahrten, wenn der Sattelauflieger abgekoppelt ist, oder für kurze Überführungsfahrten der Sattelzugmaschine. Bevorzugte Weiterbildungen dieser Ausführungsform sehen vor, dass der zweite Energiespeicher weniger als ein Zehntel oder weniger als ein Zwanzigstel oder weniger als ein Fünfzigstel der Kapazität des ersten Energiespeichers aufweist. Entsprechend kann der zweite Energiespeicher vorteilhaft mit wenig Bauraumbedarf im Bereich der Sattelzugmaschine angeordnet werden.

Erfindungsgemäß ist am Sattelauflieger eine weitere elektrische Maschine an einer der Aufliegerachsen angeordnet zum Antrieb des Sattelaufliegers, wenn dieser nicht an die Sattelzugmaschine mechanisch angekoppelt ist. Diese weitere elektrische Maschine wird nachfolgend als zweite elektrische Maschine bezeichnet.

Ferner kann am Sattelauflieger ein lenkbares Stützrad, das vorzugsweise in eine Gebrauchs- und eine Nichtgebrauchsstellung bringbar ist, angeordnet sein. In der Nichtgebrauchsstellung kann das lenkbare Stützrad eingefahren und/oder eingeklappt sein. In der Gebrauchsstellung ist es ausgefahren und/oder ausgeklappt und hat Bodenkontakt. Das lenkbare Stützrad kann zusätzlich zu den oder anstelle der vorstehend bereits erwähnten einfahrbaren und/oder abklappbaren Stützfüße vorgesehen sein.

Die zweite elektrische Maschine und das lenkbare Stützrad ermöglichen ein selbstständiges Rangieren des Sattelaufliegers auf dem Betriebshof - ohne angekoppelte Sattelzugmaschine.

Der Sattelauflieger kann eine elektrische Ladeschnittstelle zum Aufladen des ersten elektrischen Energiespeichers aufweisen. Dies ermöglicht ein Aufladen des ersten elektrischen Energiespeichers auch ohne angekoppelte Sattelzugmaschine, z. B. bei einem Beladungs- oder Entladungsvorgang der Fracht des Sattelaufliegers in einem Betriebsterminal, z. B. Logistikzentrum. Dies ist besonders vorteilhaft, da die für den Langstreckentransport notwendige Batteriekapazität während der Be- und Entladung mit Gütern mit geringerem Zeitverlust für den nächsten Einsatz geladen werden kann, ohne dass die Sattelzugmaschine angekoppelt sein muss. Die Zugmaschine kann dann direkt mit dem nächsten vorgeladenen Auflieger für den nächsten Einsatz gekoppelt werden und ist umgehend wieder betriebsbereit.

In einer weiteren Ausführungsform umfasst das Sattelkraftfahrzeug eine Steuereinrichtung zum Energiespeichermanagement des ersten Energiespeichers, vorzugsweise zur Steuerung des Lade- und Entladevorgangs und/oder der Temperierung, d. h. zum Kühlen und/oder Heizen, des ersten Energiespeichers. Hierbei ist die Steuereinrichtung bevorzugt außerhalb des Sattelaufliegerbodens am Sattelauflieger angeordnet. Die Steuereinrichtung ist somit räumlich getrennt von den eigentlichen Energiespeichermodulen des elektrischen Energiespeichers angeordnet. Dies ermöglicht eine bessere Zugänglichkeit zur Steuereinrichtung und eine bessere Abführung von Wärme des Temperierkreislaufs. Beispielsweise kann die Steuereinrichtung an einem vorderen oberen Bereich des Sattelaufliegers angeordnet sein.

Der erste elektrische Energiespeicher kann als sog. Batteriepack ausgeführt sein. Beispielsweise kann der erste elektrische Energiespeicher mehrere parallel verschaltete elektrische Energiespeichermodule aufweisen, wobei jeder der Energiespeichermodule elektrisch verbundene Zellmodule, die vorzugsweise über Stromschienen verbunden sind, ein Schaltschütz, eine Energiespeicherhochvoltschnittstelle und eine das Schaltschütz steuernde Energiespeichersteuerung umfasst und wobei jedes der Zellmodule mehrere Speicherzellen und vorzugsweise eine Zellmodulsteuerung aufweist. Die Zellmodule sind ausgebildet, mit einem Batteriemanagementsystem des Batteriepacks zu Überwachungszwecken zu kommunizieren, wobei interne Temperatursensoren und/oder Zellspannungsüberwachungen vorgesehen sein können.

Gemäß einem zweiten allgemeinen Gesichtspunkt der Erfindung wird ein Verfahren zum Betrieb einer Sattelkraftfahrzeug bereitgestellt, wobei das Sattelkraftfahrzeug wie in diesem Dokument beschrieben ausgeführt ist. Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale betreffend die Ausbildung der Sattelkraftmaschine gelten somit auch für das Verfahren.

Das erfindungsgemäße Verfahren umfasst das Durchführen eines Ladevorgangs des ersten elektrischen Energiespeichers während eines Be- und/oder Entladevorgangs des Sattelaufliegers.

Dies bietet den besonderen Vorzug, dass die für die Fahrleistung, insbesondere für den Langstreckentransport, notwendige Batteriekapazität im Logistikzentrum während der Be- und Entladung mit Gütern des Sattelaufliegers mit geringerem Zeitverlust für den nächsten Einsatz geladen werden kann. Die Zugmaschine kann dann direkt mit dem nächsten vorgeladenen Auflieger für den nächsten Einsatz gekoppelt werden und ist umgehend wieder betriebsbereit.

Gleichzeit ermöglicht die erfindungsgemäße Anordnung und Ausführung des ersten elektrischen Energiespeichers am Sattelauflieger die Unterbringung einer für eine hohe Reichweite notwendigen Batteriekapazität trotz des begrenzten Platzes einer klassischen Sattelzugmaschine.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht einer Sattelkraftmaschine gemäß einer Ausführungsform der Erfindung; und
- Figur 2: eine schematische Seitenansicht einer Sattelkraftmaschine gemäß einer weiteren Ausführungsform der Erfindung und eine Illustration eines Verfahrens gemäß einer Ausführungsform der Erfindung.

Gleiche oder äquivalente Elemente sind in allen Figuren mit denselben Bezugszeichen bezeichnet und zum Teil nicht gesondert beschrieben.

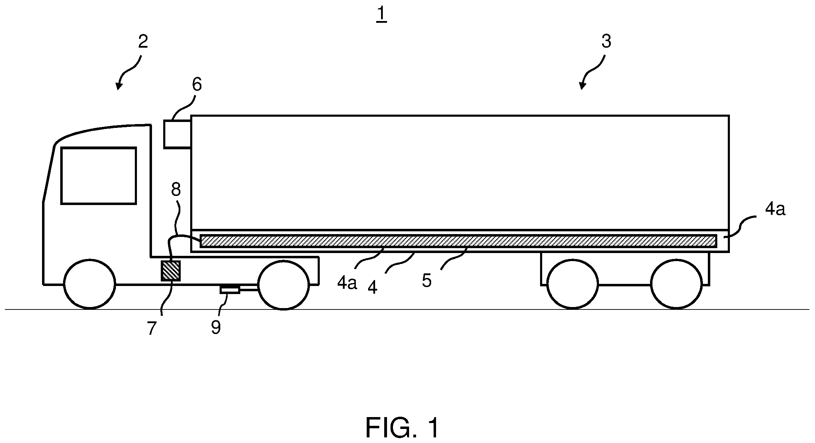

Figur 1 zeigt eine schematische Seitenansicht einer Sattelkraftmaschine gemäß einer Ausführungsform der Erfindung. Bei dem Sattelzug handelt es sich um ein batterieelektrisch betriebenes Sattelkraftfahrzeug 1 mit einer Sattelzugmaschine 2, einem Sattelauflieger 3 und einer in der Sattelzugmaschine 1 angeordneten ersten elektrischen Maschine 9 zum Antrieb des Sattelkraftfahrzeugs 1. Die erste elektrische Maschine ist aus einem ersten elektrischen Energiespeicher 5 mit elektrischer Antriebsenergie versorgbar. Hierbei ist der erste elektrische Energiespeicher 5 in einen Sattelaufliegerboden 4 baulich integriert. Wie in Figur 1 erkennbar ist, erstreckt sich der erste Energiespeicher dabei über einen Großteil der Grundfläche des Sattelaufliegerbodens 4.

Der Sattelaufliegerboden 4 ist hierbei als Multifunktionsbauteil ausgeführt und umfasst zunächst in an sich bekannter Weise eine Tragstruktur zur Aufnahme einer durch eine Beladung des Sattelaufliegers verursachten Traglast. Diese Tragstruktur ist hier nicht gesondert dargestellt; sie kann jedoch in an sich bekannter Weise ausgeführt sein.

Der Sattelaufliegerboden 4 dient ferner zur Aufnahme und Umhausung des ersten elektrischen Energiespeichers 5. Hierzu ist im Aufliegerboden ein Hohlraum 4a vorgesehen, der eine Höhe von ca. 0,3 m aufweist und sich über einen Großteil der Grundfläche des Aufliegerbodens 4 erstreckt und in welchem der erste elektrische Energiespeicher 5 angeordnet ist.

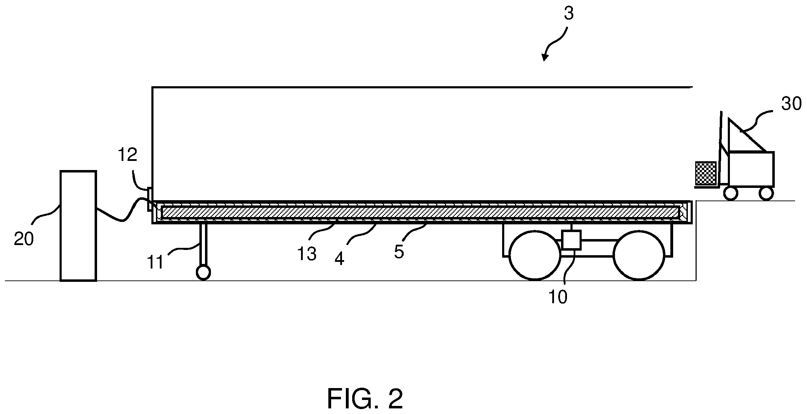

Wie in der weiteren Ausführungsform der Figur 2 dargestellt ist, kann der Sattelaufliegerboden 4 ferner eine Crashstruktur 13 aufweisen zum Schutz des in den Sattelaufliegerboden 4 integrierten ersten elektrischen Energiespeichers 5. Die Crashstruktur 13 kann z. B. Deformationselemente umfassen, die den ersten elektrischen Energiespeicher außenseitig zumindest in Teilbereichen umgeben und über die Kräfte in einem Crashfall gezielt weitergeleitet und/oder aufgenommen werden, um eine Krafteinleitung in den ersten elektrischen Energiespeicher zu vermeiden.

Der erste elektrische Energiespeicher weist eine Bruttokapazität von über 1800 kWh auf, um eine langstreckentaugliche Batteriekapazität für eine Tagelaufleistung von ca. 750 km vorzuhalten.

An einem vorderen oberen Bereich des Sattelaufliegers 3 ist eine Steuereinrichtung 6 angeordnet, die auch als Batteriemanagementsystem (BMS) bezeichnet werden kann, die zum Energiespeichermanagement des ersten Energiespeichers 5 ausgebildet ist und zur Steuerung des Lade- und Entladevorgangs und der Temperierung des ersten Energiespeichers 5 mittels eines Kühlkreislaufs dient.

Das Sattelkraftfahrzeug 1 verfügt ferner über einen in der Sattelzugmaschine 2 angeordneten zweiten elektrischen Energiespeicher 7, der ausgebildet ist, die erste elektrische Maschine 9 mit elektrischer Energie zu versorgen, wobei eine Kapazität des zweiten elektrischen Energiespeichers 7 wesentlich kleiner als die Kapazität des ersten Energiespeichers 5 ist. Der zweite elektrische Energiespeicher 7 und/oder dessen Kapazität kann lediglich beispielhaft ausgelegt sein, um eine minimale Reichweite der Sattelzugmaschine (ohne Sattelauflieger) zu erzielen, die mindestens 30 km oder mindestens 50 km entspricht. Der zweite elektrische Energiespeicher 7 und/oder dessen Kapazität kann dabei wiederum lediglich beispielhaft ausgelegt sein, dass die maximale Reichweite unterhalb von 150 km oder unterhalb von 100 km liegt, somit wesentlich kleiner als die Reichweite ist, die mittels des ersten elektrischen Energiespeichers erzielbar ist. Der zweite Energiespeicher dient lediglich als Zusatzspeicher für Rangiervorgänge oder kurze Überführungsfahrten der Zugmaschine 2, wenn der Sattelauflieger 3 nicht angekoppelt ist. Die elektrische Kopplung zwischen dem zweiten elektrischen Energiespeicher (Rangierenergiespeicher) 7 und dem ersten Energiespeicher 5 erfolgt über eine Parallelschaltung 8 bei gleicher Spannungslage, so dass sich die Kapazitäten addieren.

Gemäß der in Figur 2 gezeigten weiteren Ausführungsform ist am Sattelauflieger 3 eine zweite elektrische Maschine 10 an einer der Aufliegerachsen angeordnet, die zum eigenständigen Antrieb des Sattelaufliegers 3 dient, z. B. für Rangiervorgänge auf einem Betriebshof, insbesondere, wenn der Sattelauflieger 3 nicht an die Sattelzugmaschine 2 mechanisch angekoppelt ist. Hierzu ist am Sattelauflieger 3 ein lenkbares Stützrad 11 angeordnet. Der Sattelauflieger 3 weist ferner eine elektrische Ladeschnittstelle 12 auf zum Aufladen des ersten elektrischen Energiespeichers 5.

Figur 2 illustriert ein Verfahren gemäß einer Ausführungsform der Erfindung. Figur 2 zeigt den von der Zugmaschine abgekoppelten Sattelauflieger 3 an einem Ladeterminal während eines Belade- oder Entladevorgangs durch ein Flurförderzeug 30, z. B. einen Gabelstapler.

Für den Belade- oder Entladevorgangs ist das lenkbare Stützrad 11 ausgefahren. Über die am Sattelauflieger 3 angeordnete Ladeschnittstelle 12 wird der erste Energiespeicher 5 während des Be- und/oder Entladevorgangs des Sattelaufliegers 3 geladen. Der Sattelauflieger 3 wird hierzu an eine Ladesäule 20 angeschlossen.

Die für den Langstreckentransport notwendige Batteriekapazität kann auf diese Weise im Logistikzentrum während der Be- und Entladung mit Gütern mit geringerem Zeitverlust für den nächsten Einsatz geladen werden. Die Zugmaschine 2 kann dann direkt mit dem nächsten vorgeladenen Auflieger 3 für den nächsten Einsatz gekoppelt werden und ist umgehend wieder betriebsbereit. Die Hauptbatteriekapazität für das Sattelkraftfahrzeug ist somit am Sattelauflieger 3 angeordnet. Hier steht genügen Platz für eine langstreckentaugliche Batteriekapazität zur Verfügung. Damit erhält das Zugfahrzeug 2 nur noch eine geringe Kapazität ausreichend zum Rangieren und für kurze Überführungsfahrten.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. So umfasst die vorliegende Offenbarung beispielsweise Ausführungsformen, bei denen der erste elektrische Energiespeicher nicht in den Sattelaufliegerboden baulich integriert ist, sich jedoch über mindestens die Hälfte einer Grundfläche des Sattelaufliegerbodens erstreckt oder weiter bevorzugt sich über einen Bereich der Grundfläche des Sattelaufliegerbodens erstreckt, der mindestens 2/3 oder mindestens 3/4 oder mindestens 4/5 oder im Wesentlichen genau so groß wie die Grundfläche des Sattelaufliegerbodens ist. Der erste Energiespeicher kann z. B. auch an einer Unterseite oder Oberseite des Sattelaufliegers befestigt sein.

### Bezugszeichenliste

- 1: Sattelkraftmaschine
- 2: Sattelzugmaschine
- 3: Sattelauflieger
- 4: Sattelaufliegerboden
- 4a: Hohlraum
- 5: Erster elektrischer Energiespeicher
- 6: Steuereinrichtung zum Energiespeichermanagement
- 7: Zweiter elektrischer Energiespeicher
- 8: Parallelverschaltung
- 9: Erste elektrische Maschine
- 10: Zweite elektrische Maschine
- 11: Lenkbares Stützrad
- 12: Ladeschnittstelle
- 13: Crashstruktur
- 20: Ladesäule
- 30: Flurförderzeug

## Patentansprüche

1. Batterieelektrisch betriebenes Sattelkraftfahrzeug (1), umfassend eine Sattelzugmaschine (2), einen Sattelauflieger (3) und eine in der Sattelzugmaschine (1) angeordnete erste elektrische Maschine (9) zum Antrieb des Sattelkraftfahrzeugs (1), die aus einem ersten elektrischen Energiespeicher (5), der im Bereich des Sattelaufliegers (3) angeordnet ist, mit elektrischer Antriebsenergie versorgbar ist;
**dadurch gekennzeichnet, dass** der erste elektrische Energiespeicher (5) in einen Sattelaufliegerboden (4) baulich integriert ist, wobei der erste elektrische Energiespeicher (5) in einem Hohlraum (4a) des Sattelaufliegerbodens (4) angeordnet ist, wobei am Sattelauflieger (3) eine zweite elektrische Maschine (10) an einer der Aufliegerachsen angeordnet ist zum Antrieb des Sattelaufliegers (3), wenn dieser nicht an die Sattelzugmaschine (2) mechanisch angekoppelt ist.

2. Sattelkraftfahrzeug (1) nach Anspruch 1, wobei sich der erste elektrische Energiespeicher (5) über mindestens die Hälfte einer Grundfläche des Sattelaufliegerbodens (4) erstreckt.

3. Sattelkraftfahrzeug (1) nach Anspruch 2, wobei sich der erste elektrische Energiespeicher (5) über einen Bereich der Grundfläche des Sattelaufliegerbodens (4) erstreckt, der mindestens 2/3 oder mindestens 3/4 oder mindestens 4/5 oder im Wesentlichen genau so groß wie die Grundfläche des Sattelaufliegerbodens (4) ist.

4. Sattelkraftfahrzeug (1) nach einem der vorhergehenden Ansprüche, wobei der Sattelaufliegerboden (4) ferner umfasst: eine Tragstruktur zur Aufnahme einer durch eine Beladung des Sattelaufliegers verursachten Traglast und eine Crashstruktur (13) zum Schutz des in den Sattelaufliegerboden (4) integrierten ersten elektrischen Energiespeichers (5).

5. Sattelkraftfahrzeug (1) nach einem der vorhergehenden Ansprüche, wobei der erste elektrische Energiespeicher (5) eine Bruttokapazität von mindestens 1250 kWh aufweist oder eine Bruttokapazität aufweist, die in einem Bereich von 1300 kWh bis 2100 kWh liegt.

6. Sattelkraftfahrzeug (1) nach einem der vorhergehenden Ansprüche, umfassend einen in der Sattelzugmaschine (2) angeordneten zweiten elektrischen Energiespeicher (7), der ausgebildet ist, die erste elektrische Maschine (9) mit elektrischer Energie zu versorgen, wobei eine Kapazität des zweiten elektrischen Energiespeichers (7) weniger als ein Zehntel oder weniger als ein Zwanzigstel oder weniger als ein Fünfzigstel der Kapazität des ersten Energiespeichers (5) aufweist.

7. Sattelkraftfahrzeug (1) nach einem der vorhergehenden Ansprüche, wobei am Sattelauflieger (3) ein lenkbares Stützrad (11), das vorzugsweise in eine Gebrauchs- und eine Nichtgebrauchsstellung bringbar ist, angeordnet ist.

8. Sattelkraftfahrzeug (1) nach einem der vorhergehenden Ansprüche, wobei der Sattelauflieger (3) eine elektrische Ladeschnittstelle (12) zum Aufladen des ersten elektrischen Energiespeichers (5) aufweist.

9. Sattelkraftfahrzeug (1) nach einem der vorhergehenden Ansprüche, wobei eine Steuereinrichtung (6) zum Energiespeichermanagement des ersten Energiespeichers (5), vorzugsweise zur Steuerung eines Lade- und Entladevorgangs und/oder einer Temperierung des ersten Energiespeichers (5), außerhalb des Sattelaufliegerbodens (4) am Sattelauflieger (3) angeordnet ist.

10. Sattelkraftfahrzeug (1) nach einem der vorhergehenden Ansprüche, wobei der erste elektrische Energiespeicher (3) mehrere parallel verschaltete elektrische Energiespeichermodule aufweist, wobei jeder der Energiespeichermodule elektrisch verbundene Zellmodule, die vorzugsweise über Stromschienen verbunden sind, ein Schaltschütz, eine Energiespeicherhochvoltschnittstelle und eine das Schaltschütz steuernde Energiespeichersteuerung umfasst und wobei jedes der Zellmodule mehrere Speicherzellen und vorzugsweise eine Zellmodulsteuerung aufweist.

11. Verfahren zum Betrieb eines Sattelkraftfahrzeugs (1), die gemäß einer der vorhergehenden Ansprüche ausgeführt ist, umfassend:
Durchführen eines Ladevorgangs des ersten elektrischen Energiespeichers (5) während eines Be- und/oder Entladevorgangs des Sattelaufliegers (3).

## Claims

1. Articulated vehicle (1) operated by battery electricity, comprising a semitrailer tractor (2), a semitrailer (3) and a first electrical machine (9) for driving the semitrailer tractor (1), which electrical machine is arranged in the semitrailer tractor (1) and can be supplied with electrical drive energy from a first electrical energy storage device (5) which is arranged in the region of the semitrailer (3),
**characterized in that** the first electrical energy storage device (5) is structurally integrated into a semitrailer base (4), wherein the first electrical energy storage device (5) is arranged in a cavity (4a) of the semitrailer base (4), wherein a second electrical machine (10) is arranged on the semitrailer (3) on one of the semitrailer axles for driving the semitrailer (3) when said semitrailer is not mechanically coupled to the semitrailer tractor (2).

2. Articulated vehicle (1) according to Claim 1, wherein the first electrical energy storage device (5) extends over at least half the area of the semitrailer base (4).

3. Articulated vehicle (1) according to Claim 2, wherein the first electrical energy storage device (5) extends over a region of the area of the semitrailer base (4) which is at least 2/3 or at least 3/4 or at least 4/5 or substantially precisely the same size as the area of the semitrailer base (4).

4. Articulated vehicle (1) according to one of the preceding claims, wherein the semitrailer base (4) further comprises: a supporting structure for receiving a load caused by loading the semitrailer, and a crash structure (13) for protecting the first electrical energy storage device (5) integrated into the semitrailer base (4) .

5. Articulated vehicle (1) according to one of the preceding claims, wherein the first electrical energy storage device (5) has a gross capacity of at least 1250 kWh or a gross capacity which lies in a range of from 1300 kWh to 2100 kWh.

6. Articulated vehicle (1) according to one of the preceding claims, comprising a second electrical energy storage device (7) which is arranged in the semitrailer tractor (2) and is designed to supply the first electrical machine (9) with electrical energy, wherein a capacity of the second electrical energy storage device (7) is less than one tenth or less than one twentieth or less than one fiftieth of the capacity of the first energy storage device (5).

7. Articulated vehicle (1) according to one of the preceding claims, wherein a steerable supporting wheel (11), which can preferably be moved to a use position and a non-use position, is arranged on the semitrailer (3).

8. Articulated vehicle (1) according to one of the preceding claims, wherein the semitrailer (3) has an electrical charging interface (12) for charging the first electrical energy storage device (5).

9. Articulated vehicle (1) according to one of the preceding claims, wherein a control device (6) for energy storage management of the first energy storage device (5), preferably for controlling a charging and discharging process and/or temperature control of the first energy storage device (5), is arranged on the semitrailer (3) away from the semitrailer base (4).

10. Articulated vehicle (1) according to one of the preceding claims, wherein the first electrical energy storage device (3) has a plurality of electrical energy storage modules connected in parallel, wherein each of the energy storage modules comprises electrically connected cell modules which are preferably connected via busbars, a contactor, an energy storage device high-voltage interface and an energy storage controller controlling the contactor, and wherein each of the cell modules has a plurality of storage cells and preferably a cell module controller.

11. Method for operating an articulated vehicle (1) which is designed according to one of the preceding claims, comprising:
carrying out a charging process of the first electrical energy storage device (5) during a loading and/or unloading process of the semitrailer (3).

## Revendications

1. Train routier articulé fonctionnant sur batterie électrique (1), comprenant un tracteur de semi-remorque (2), une semi-remorque (3) et une première machine électrique (9) disposée dans le tracteur de semi-remorque (1), servant à entraîner le train routier articulé (1) et pouvant être alimentée en énergie électrique d'entraînement à partir d'un premier accumulateur d'énergie électrique (5) qui est disposé au niveau de la semi-remorque (3) ;
**caractérisé en ce que** le premier accumulateur d'énergie électrique (5) est intégré par construction dans le plancher de semi-remorque (4), le premier accumulateur d'énergie électrique (5) étant disposé dans une cavité (4a) du plancher de semi-remorque (4), dans lequel sur la semi-remorque (3) une deuxième machine électrique (10) est disposée sur l'un des essieux de semi-remorque pour entraîner la semi-remorque (3) lorsque celle-ci n'est pas accouplée mécaniquement au tracteur de semi-remorque (2).

2. Train routier articulé (1) selon la revendication 1, dans lequel le premier accumulateur d'énergie électrique (5) s'étend sur au moins la moitié d'une surface de base du plancher de semi-remorque (4).

3. Train routier articulé (1) selon la revendication 2, dans lequel le premier accumulateur d'énergie électrique (5) s'étend sur une zone de la surface de base du plancher de semi-remorque (4) qui correspond au moins à 2/3 ou au moins à 3/4 ou au moins à 4/5 ou substantiellement à la totalité de la surface de base du plancher de semi-remorque (4).

4. Train routier articulé (1) selon l'une quelconque des revendications précédentes, dans lequel le plancher de semi-remorque (4) comprend en outre : une structure porteuse servant à absorber une charge provoquée par un chargement de la semi-remorque et une structure anticollision (13) servant à protéger le premier accumulateur électrique (5) intégré dans le plancher de semi-remorque (4).

5. Train routier articulé (1) selon l'une quelconque des revendications précédentes, dans lequel le premier accumulateur d'énergie électrique (5) présente une capacité brute d'au moins 1250 kWh ou une capacité brute qui est comprise dans une plage de 1300 kWh à 2100 kWh.

6. Train routier articulé (1) selon l'une quelconque des revendications précédentes, comprenant un deuxième accumulateur d'énergie électrique (7) disposé dans le tracteur de semi-remorque (2), qui est réalisé pour alimenter en énergie électrique la première machine électrique (9), une capacité du deuxième accumulateur d'énergie électrique (7) présentant moins d'un dixième ou moins d'un vingtième ou moins d'un cinquantième de la capacité du premier accumulateur d'énergie (5).

7. Train routier articulé (1) selon l'une quelconque des revendications précédentes, dans lequel une roue d'appui orientable (11) est disposée sur la semi-remorque (3) et peut de préférence être amenée dans une position d'utilisation et une position de non-utilisation.

8. Train routier articulé (1) selon l'une quelconque des revendications précédentes, dans lequel la semi-remorque (3) présente une interface de charge électrique (12) servant à recharger le premier accumulateur d'énergie électrique (5).

9. Train routier articulé (1) selon l'une quelconque des revendications précédentes, dans lequel un dispositif de commande (6) pour la gestion d'accumulateur d'énergie du premier accumulateur d'énergie (5), de préférence pour commander une opération de charge et de décharge et/ou un équilibrage de température du premier accumulateur d'énergie (5), est disposé sur la semi-remorque (3) en dehors du plancher de semi-remorque (4).

10. Train routier articulé (1) selon l'une quelconque des revendications précédentes, dans lequel le premier accumulateur d'énergie électrique (3) présente plusieurs modules d'accumulateur d'énergie électrique connectés en parallèle, chacun des modules d'accumulateur d'énergie comprenant des modules cellulaires reliés électriquement, qui sont de préférence reliés par le biais de barres conductrices, un contacteur, une interface haute tension d'accumulateur d'énergie et une commande d'accumulateur d'énergie commandant le contacteur, et dans lequel chacun des modules cellulaires présente plusieurs cellules d'accumulateur et de préférence une commande de module cellulaire.

11. Procédé d'exploitation d'un train routier articulé (1) qui est réalisé selon l'une quelconque des revendications précédentes, comprenant l'étape consistant à :
exécuter une opération de charge du premier accumulateur d'énergie électrique (5) pendant une opération de chargement et/ou de déchargement de la semi-remorque (3).
